# EUROPEAN PATENT APPLICATION

(11) **EP 0 994 488 A1**
(43) Date of publication of application: **19.04.2000**
(21) Application number: 99103660.9
(22) Date of filing: 25.02.1999
(51) Int. Cl.: G21C 5/10, G21C 13/02, G21C 15/00

(54) **Upper core supporting structure for nuclear reactor with coolant flow stabilizing facility**

(30) Priority: 15.10.1998 JP 29391998
(71) Applicant: Mitsubishi Heavy Industries, Ltd., Tokyo 100-0005 (JP)
(72) Inventor: Ichikawa, Toshio, 5-1 Marunouchi 2-chome, Chiyoda-ku Tokyo (JP); Matsushima, Yoko, 5-1 Marunouchi 2-chome, Chiyoda-ku Tokyo (JP); Kubo, Noboru, KOBE Shipyard Machinery Works, 1-chome, Hyogo-ku, Kobe, Hyogo-ken (JP); Nakajima, Makoto, KOBE Shipyard Machinery Works, 1-chome, Hyogo-ku, Kobe, Hyogo-ken (JP); Izumi, Hajime, Takasago Research Development Cente, Shinhama 2-chome, Takasago, Hyogo-ken (JP)
(74) Representative: Perkins, Sarah

(57) **Abstract**

In some nuclear reactors, outlet nozzles (12) are disposed in a pair adjacent to each other due to restrictions imposed by particular configurations of a primary coolant loop and demands for reductions in diameter of a containment vessel. In such reactors, streams of the coolant flowing toward the individual outlet nozzles (12) within a top nozzle become complicated and unstable. An improved reactor core supporting structure is provided which is capable of stabilizing the coolant flow in a region near to the outlet nozzles to thereby ensure temperature measurement of the coolant flowing through an outlet piping with enhanced accuracy and reliability. The structure is disposed within a upper plenum (40) which is defined above a reactor core and hydraulically communicated with a plurality of outlet nozzles (12) installed on a side wall of a nuclear reactor vessel (10) and includes at least a flow stabilizing member disposed at a location close to the outlet nozzle (12) or disposed in a region between the adjacent outlet nozzles (12).

## Description

The present invention generally relates to a core supporting structure disposed within a upper plenum of a pressurized water reactor, which plenum is disposed above a reactor core in which heat exchange takes place between fuel rods and a coolant such as light water and provided with inlet and outlet nozzles. More particularly, the invention is concerned with the core supporting structure which includes coolant flow stabilizing members disposed in the vicinity of the outlet nozzles of the upper plenum.

In a pressurized water reactor for a power plant, light water serving as a coolant is fed to a reactor core to be heated to a high temperature by heat generated through nuclear fission. The heated light water is taken out and supplied to a steam generator for generating steam which is then fed to a steam system provided separately from a core cooling system to be utilized for rotationally driving a steam turbine and a rotor of an electric generator operatively coupled thereto for thereby generating electric energy for utility.

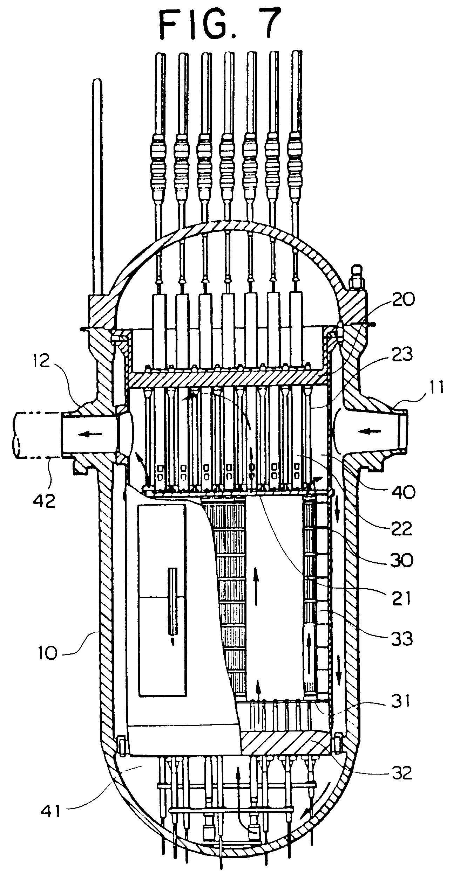

For a better understanding of the invention, background techniques thereof will be reviewed below. Figure 7 of the accompanying drawings shows an internal structure of a pressurized water reactor, a typical nuclear reactor. Referring to the figure, accommodated within a nuclear reactor vessel 10 are reactor core internals such as nuclear fuel assemblies, control rods, control rod cluster guide tubes, a coolant, supporting structures and others. In general, the nuclear reactor vessel 10 is integrally provided with inlet nozzles 11 and outlet nozzles 12 for the reactor coolant which is light water, and a core barrel 30 is suspended vertically within the nuclear reactor vessel 10. The number of the inlet nozzles 11 and the outlet nozzles 12, respectively, coincide with the number of coolant circulation loops which in turn depends on the output power rating of the reactor. Ordinarily, the number of the inlet nozzles 11 as well as that of the outlet nozzles 12 ranges from two to four.

By way of example, in a power plant of a large power generation capacity, there are ordinarily provided a plurality of coolant circulation loops in consideration of the capacities of pumps and the steam generator employed in the cooling system as well as restrictions imposed in respect to the disposition thereof within a containment vessel. In other words, there are installed a number of coolant circulation loops which is determined in dependence on the output capacity of the nuclear reactor. In general, a reactor power plant of a large output capacity is provided with four coolant circulation loops. In that case, the numbers of the inlet nozzles 11 and the outlet nozzles 12 are also four, respectively. The inlet nozzles 11 and the outlet nozzles 12 are installed in the nuclear reactor vessel with predetermined inter-distance in a circumferential direction thereof. Further, disposed within the core barrel 30 at a lower portion thereof are a lower core support plate 32 and a lower core plate 31, each extending in a horizontal direction. A bottom plenum 41 is defined beneath the lower core support plate 32.

Mounted on the lower core plate 31 are a large number of loaded fuel assemblies 33 which are disposed adjacent to one another to thereby constitute a reactor core. Disposed above the fuel assembly 33 is an upper core plate 21 which is supported by an upper core support plate 20 by way of upper core support columns 23. The fuel assemblies 33 are pressed downwards by means of the upper core plate 21 so that the fuel assemblies 33 are prevented from displacing upwards under the influence of buoyancy exerted by the flowing coolant. A plurality of control rod cluster guide tubes 22 are supported at lower ends thereof on the upper surface of the upper core plate 21 by means of supporting pins or the like (not shown). The control rod cluster guide tubes 22 extend upwardly through and beyond the upper core support plate 20. By withdrawing the control rod clusters (not shown either) from the reactor core through the medium of the control rod cluster guide tubes 22 or inserting the control rod clusters into the fuel assemblies 33 of the reactor core through the control rod cluster guide tubes 22, the thermal output of the reactor core can be adjusted.

The upper core plate 21 and the upper core support plate 20 are interconnected by the upper core support columns 23 in order to ensure structurally high strength or robustness. Furthermore, the control rod cluster guide tubes 22 extending through the upper core support plate 20 are fixedly secured to the upper core support plate 20. Thus, the control rod cluster guide tubes 22 are protected against displacement or dislocation in a lateral or transverse direction. Defined between the upper core plate 21 and the upper core support plate 20 interconnected as mentioned above is a upper plenum 40.

Next, description will be directed to the flows or streams of light water employed as the coolant within the nuclear reactor vessel 10 realized in the structure described above. Referring to Fig. 7, light water of low temperature fed to the nuclear reactor vessel 10 by way of the inlet nozzles 11 follows flow paths of such patterns as indicated by arrows in Fig. 7. More specifically, light water fed to the nuclear reactor vessel 10 through the inlet nozzle 11 flows at first downwardly through an annular space defined between the outer surface of the core barrel 30 and the inner wall of the nuclear reactor vessel 10. The flowing direction of the light water is forced to turn upwards within the bottom plenum 41. Thereafter, light water flows into the reactor core after passing through the lower core support plate 32 and the lower core plate 31. Within the reactor core, light water flows upwardly substantially in parallel. In the course of flowing through the reactor core, heat generated by the fuel rods of the fuel assemblies is deprived of by light water, which results in temperature rise thereof. After passing through the upper core plate 21, the flowing direction of light water changes to a horizontal or transverse direction. Finally, light water leaves the nuclear reactor vessel 10 through the outlet nozzle 12 to be supplied to a steam generator (not shown) by way of an outlet pipe 42.

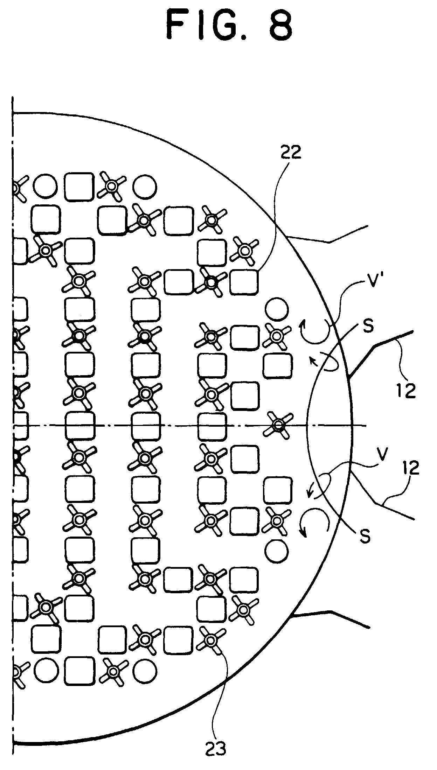

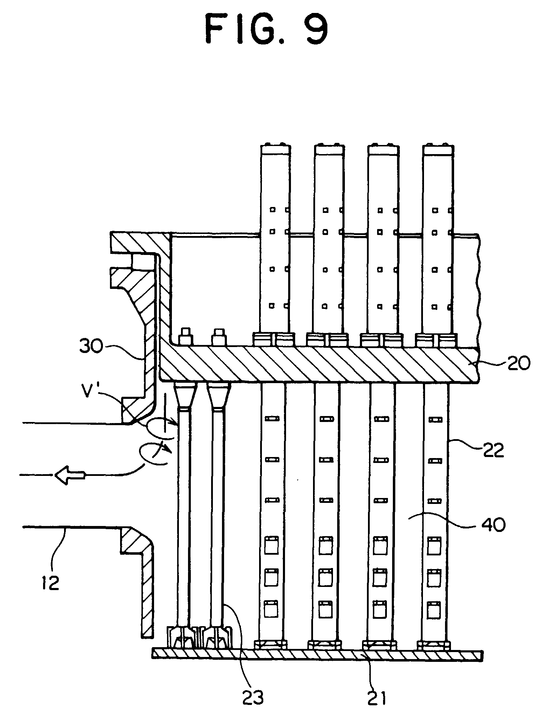

In this conjunction, it is noted that in some nuclear reactor vessels 10 of the structure mentioned above, two outlet nozzles 12 are disposed adjacent to each other in order to cope with restrictions involved with accommodating specific configurations of a primary coolant loop as well as demands for reduction of the reactor containment vessel diameter etc. Consequently, streams of the coolant flowing toward the individual outlet nozzles 12 within the nuclear reactor vessel 10 become complicated and unstable dependinge on the flow rates of the coolant in the individual loops and layout of the internal structural members disposed within the upper plenum 40. From observation of the flow behaviors and temperature measurement in a simulation test which allows the flow behaviors of a fluid in a region of concern to be visually examined, it has been experimentally found that such flow unstableness as mentioned above is a factor fluctuations of coolant temperature within the outlet nozzles 12 and the outlet pipes 42. Furthermore, in a region located in the vicinity of the adjacent outlet nozzles 12 where no structural components are present, as indicated by a line S-S in Fig. 8, vortexes V and V' are likely to occur, which are also a factor for coolant flow instability. Further, the vortex V' illustrated in Fig 9 represents a so-called vertical vortex generated in the coolant stream flowing toward the outlet nozzle 12 from the upper core support plate 20.

As will be appreciated from the foregoing, the unstable coolant flow causes fluctuations or variations in the temperature of the coolant flowing through the outlet pipes 42 connected to the outlet nozzles 12. Consequently, measurement of a mean temperature of the nuclear reactor (i.e., average temperature of the nuclear reactor) is likely to be adversely affected because such temperature measurement is realized by measuring the temperature of the coolant flowing through the outlet pipe 42 connected to the outlet nozzle 12. As a result, unwanted erroneous or incorrect operation of control systems for controlling the core output and the flow rate of the steam fed to the turbine may arise, which control is performed by taking into account the mean temperature of the reactor core as determined on the basis of the measured temperatures of the coolant within the outlet pipes 42.

In light of the state of the art described above, it is an object of the present invention to provide a reactor core supporting structure disposed within the nuclear reactor vessel, which structure includes a core supporting structural member so configured and disposed as to be capable of stabilizing the coolant flow in a region located near or close to an outlet nozzle, to thereby eliminate difficulties which may otherwise be involved in the temperature measurement of the coolant flowing through the outlet pipe.

In view of the above and other objects which will become apparent as the description proceeds, the present invention is directed to a nuclear reactor including a upper plenum which is defined above a reactor core and hydraulically communicated with a plurality of outlet nozzles installed on a side wall of a nuclear reactor vessel. According to an aspect of the present invention, there is provided a structure disposed within the upper plenum for supporting the reactor core, which structure includes at least one flow stabilizing member disposed at a location close to the outlet nozzle or disposed in a region substantially intervening between adjacent outlet nozzles.

By virtue of the arrangement described above, the area of the region or space in which no structural member is present in the vicinity of the outlet nozzle(s) is decreased, making generation of the vortexes more difficult, whereby the flow behavior of the coolant in the vicinity of the outlet nozzle(s) can be stabilized. Thus, the measurement of a mean temperature of the nuclear reactor based on the measurement of the temperature of the coolant in a pipe system succeeding to the outlet nozzle can be realized with enhanced accuracy and reliability, whereby erroneous or incorrect operation of the control systems mentioned previously can be more positively prevented.

In a mode for carrying out the invention, the flow stabilizing member may be disposed substantially over a whole distance intervening between a lower core plate and a lower core support plate which cooperate to define the upper plenum.

With the arrangement mentioned above, the region or space where no structural member is present can further be decreased, whereby suppression of the vortexes and flow stabilization of the coolant can further be enhanced.

In another mode for carrying out the invention, the flow stabilizing member should preferably be constituted by a cylindrical member or a tubular member having a substantially rectangular channel form.

In case the flow stabilizing member is realized in the form of a cylindrical member, the coolant stream flowing around the cylindrical member becomes smoothed, making generation of vortexes difficult. On the other hand, when the flow stabilizing member is realized by the tubular member having a substantially U-like cross section, the flow stabilizing member can be mounted without any appreciable difficulty. Further, the latter can be mounted by making use of existing core supporting structural members.

In yet another mode for carrying out the invention, the flow stabilizing member should preferably be provided with a number of small through-holes.

With the arrangement mentioned above, vortexes are blocked by the flow stabilizing member while occurrence of the vortex originating in the flow stabilizing member and moving toward the outlet nozzle can be positively prevented.

The above and other objects, features and attendant advantages of the present invention will more easily be understood by reading the following description of the preferred embodiments thereof taken, only by way of example, in conjunction with the accompanying drawings.

In the course of the description which follows, reference is made to the drawings, in which:
Fig. 1 is a half top plan view showing dispositions or layout of internal structural members disposed within a upper plenum of a nuclear reactor vessel of a four-loop reactor plant in which flow stabilizing members according to an embodiment of the present invention are mounted;
Fig. 2 is a half top plan view showing dispositions or layout of internal structural members disposed within a upper plenum of a nuclear reactor vessel of a four-loop reactor plant in which existing upper core support columns are replaced, respectively, by flow stabilizing members according to another embodiment of the present invention;
Fig. 3 is an enlarged fragmentary vertical sectional view showing a structure of a flow stabilizing member according to yet another embodiment of the present invention;
Fig. 4 is a cross sectional view of the same taken along a line A-A in Fig. 2;
Fig. 5 is an enlarged fragmentary vertical sectional view showing a structure of a flow stabilizing member according to still another embodiment of the present invention;
Fig. 6 is a cross sectional view of the same taken along a line A-A in Fig. 4;
Fig. 7 is a vertical sectional view showing schematically major portions of a hitherto known pressurized water reactor;
Fig. 8 is a half top plan view showing dispositions of internal structural members disposed within a upper plenum of a nuclear reactor vessel of a four-loop reactor plant known heretofore; and
Fig. 9 is a fragmentary vertical sectional view showing schematically a region in the vicinity of an outlet nozzle within a upper plenum in a hitherto known pressurized water reactor.

The present invention will be described in detail in conjunction with what is presently considered as preferred or typical embodiments thereof by reference to the drawings. In the following description, like reference characters designate like or corresponding parts throughout the several views. Also in the following description, it is to be understood that such terms as "right", "left", "top", "bottom" and the like are words of convenience and are not to be construed as limiting terms.

### Embodiment 1

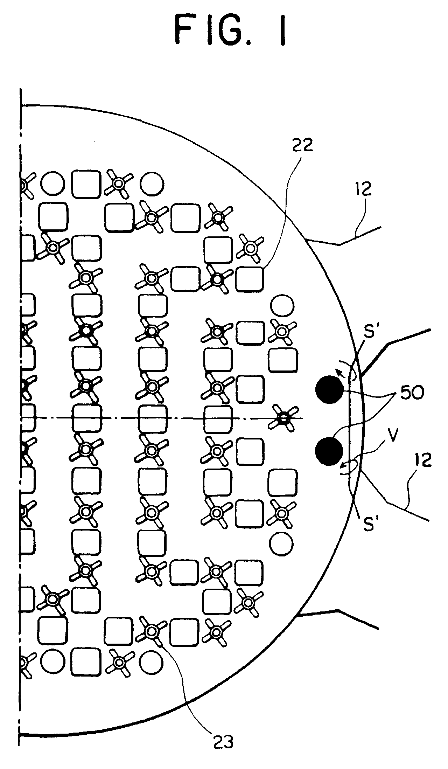

Figure 1 is a half top plan view showing dispositions or layout of internal structural members disposed within a upper plenum of a nuclear reactor vessel of a four-loop reactor plant, the internal structural members including flow stabilizing members according to a first embodiment of the present invention. As can be seen in the figure, a pair of perforated members 50 each of which serves as the flow stabilizing member are disposed between adjacent outlet nozzles 12. More specifically, the position at which the perforated members 50 are mounted, respectively, on the upper core plate 21 within the upper plenum 40 are located in an outer peripheral unoccupied region which corresponds to the outer peripheral portion of the core and in which none of the control rod cluster guide tube 22, the upper core support column 23 and the other core supporting structural member is present. The outer peripheral unoccupied region mentioned above is indicated exemplarily by a curved line S-S in Fig. 8. In another words the outer peripheral unoccupied region is a region where there are no streams of the primary coolant flowing through the upper core plate 21.

By disposing the perforated members 50 each serving as the flow stabilizing member, in the unoccupied region between the adjacent outlet nozzles 12, the area of the unoccupied region is decreased, as indicated by a curved line S'-S' in Fig. 1, whereby the coolant flow in the vicinity of the adjacent outlet nozzles 12 is stabilized. Further, due to the decrease of the area of the unoccupied region S-S', generation of vortexes V in this region can be suppressed. Consequently, the coolant flow in the vicinity of the outlet nozzles 12 within the upper plenum 40 can further be stabilized. In this way, variation of temperature of the coolant flowing through the outlet pipe connected to the outlet nozzle 12 can be suppressed, which contributes to suppression of the temperature fluctuation mentioned previously. Further, since the flow stabilizing member is provided with a large number of small through-holes, it is difficult for vortexes originating in the perforated members 50 to occur when the coolant flowing toward the outlet nozzle 12 passes by the perforated members 50.

Each of the perforated members 50 is provided substantially over a whole distance intervening between the upper core support plate 20 and the upper core plate 21 which cooperate to define the upper plenum 40. At this juncture, it is also to be mentioned that the perforated member 50 should preferably have substantially the same cross- sectional area throughout the whole length thereof. This is because the location within the upper plenum 40 at which the perforated members 50 is disposed can not involve any increase of the hydrodynamic load applied to the core supporting structural members within the upper plenum 40 since the coolant flowing toward the outlet nozzle 12 encounters no blocking action. Accordingly, it is preferred to decrease the area or space of the unoccupied region as far as possible for effectively stabilizing the coolant flow while suppressing the occurrence of vortexes. Incidentally, in the supporting structure according to the instant embodiment of the invention, two perforated members 50 are juxtaposed, as can be seen from Fig. 1.

### Embodiment 2

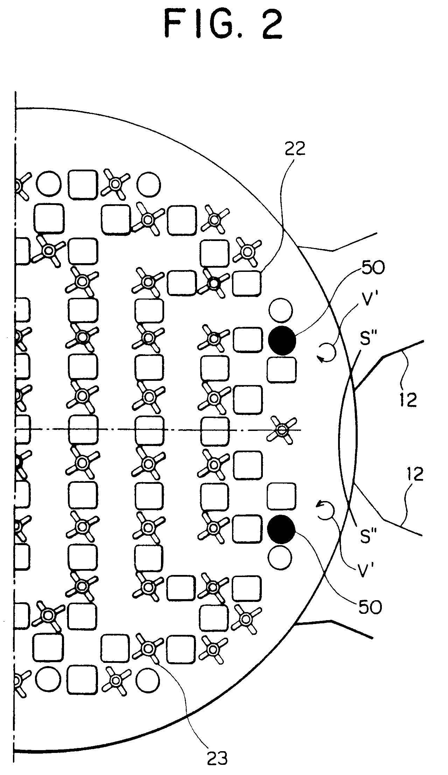

In the core supporting structure within a nuclear reactor according to a second embodiment of the present invention, the perforated members 50 each serving as the flow stabilizing member are disposed, replacing the upper core support columns 23, respectively, which are positioned closely to the outlet nozzles 12, as is shown in Fig. 2. As mentioned previously, the perforated members 50 have substantially the same cross-sectional area throughout the whole length thereof. Accordingly, the perforated members 50 occupy a greater space than the existing upper core support column 23. Thus, with the arrangement according to the instant embodiment of the invention, the area of the unoccupied region or space S''-S'' (see Fig. 2) is decreased, whereby the coolant stream is constricted, or blocked which contributes to suppressing the occurrence of vertical vortexes such as illustrated in Fig. 9. As a result, the stream of the coolant flowing into the outlet nozzle 12 can be stabilized with the temperature fluctuation of the coolant within the outlet pipe connected to the outlet nozzle 12 being reduced.

### Embodiment 3

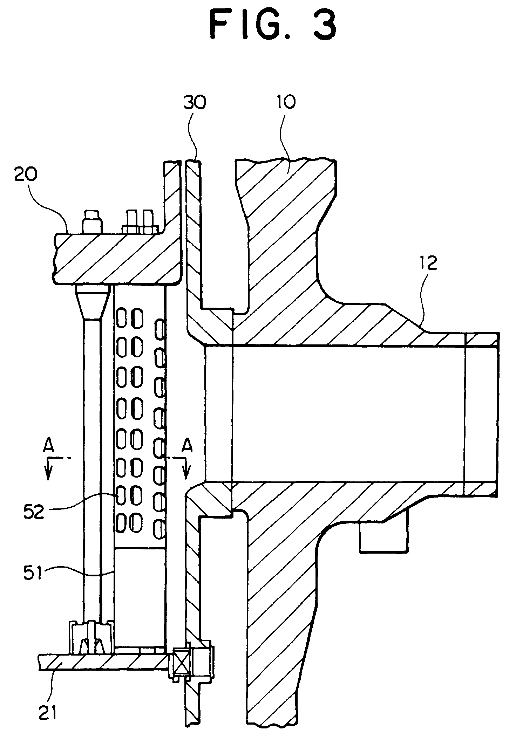

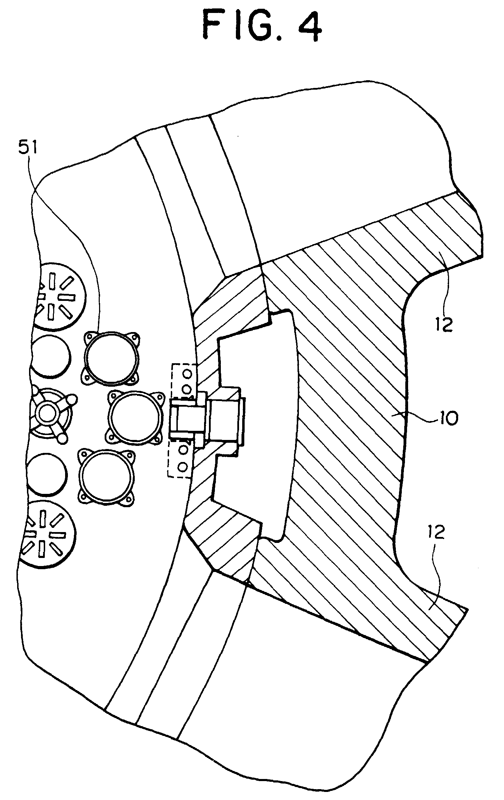

Figures 3 to 4 show a core supporting structure according to a third embodiment of the present invention in which the flow stabilizing members are so configured and disposed as to stabilize the coolant flow in the vicinity of the adjacent outlet nozzles 12 while suppressing generation of vortexes more effectively. More specifically, in the flow stabilizing member according to the instant embodiment of the invention, three perforated cylindrical tubes 51 are employed as the flow stabilizing members, respectively, wherein the intermediate one thereof is positionally offset toward the outer periphery of the upper plenum 40. The triplet of perforated cylindrical tubes 51 are disposed in an unoccupied region. Each of the perforated cylindrical tubes 51 has the same outer diameter throughout the whole length thereof. In this conjunction, the outer diameter of the perforated cylindrical tube 51 should preferably be large in order to decrease the region or space located close to the outlet nozzle 12 and extending from the upper core support plate 20 and the area of the unoccupied region S'-S' in the vicinity of the adjacent outlet nozzles 12. Furthermore, each of the perforated cylindrical tubes 51 is provided with a large number of small through-holes 52 over a range which can cover fully the bore of the outlet nozzle 12. By providing the perforated cylindrical tube 51 with the small through-holes 52 in this manner, vortexes can be blocked. Further, it is possible to make it difficult for vortexes to occur which originate in the perforated cylindrical tubes 51. Incidentally, it should also be added that by disposing the perforated cylindrical tubes 51 between the upper core plate 21 and the upper core support plate 20, the mechanical strength of the core supporting structure can be enhanced.

### Embodiment 4

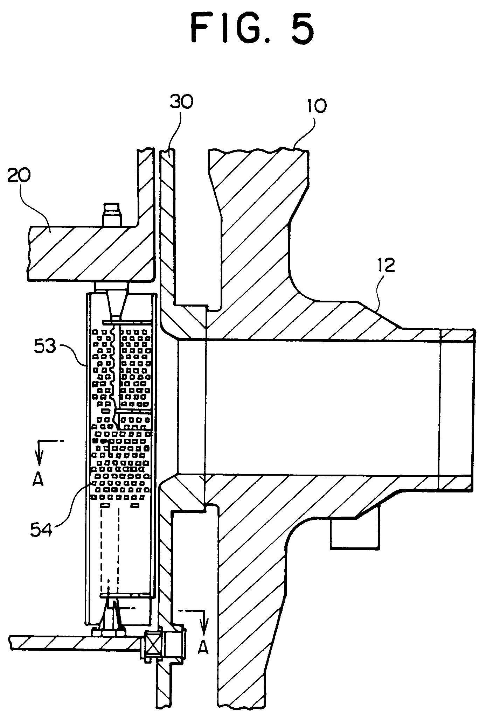

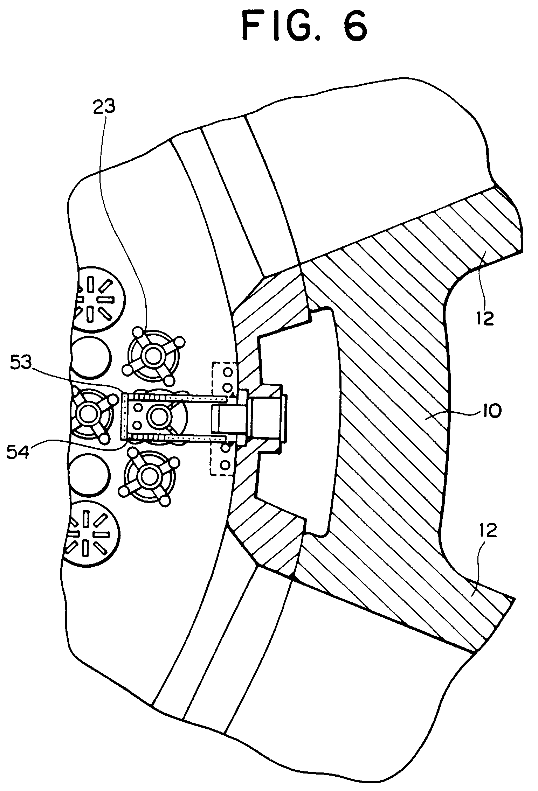

In the core supporting structure according to a fourth embodiment of the present invention shown in Figs. 5 and 6, three upper core support columns 23 are installed in a region intervening between the adjacent outlet nozzles 12, wherein a perforated channel-like plate member 53 having an approximately U-like cross section is mounted in an unoccupied region in such a fashion that the middle one of the upper core support columns 23 is enclosed by the perforated channel-like plate member 53. In other words, the perforated channel-like plate member 53 is mounted in the state opened radially outwardly as viewed from the center of the nuclear reactor vessel 10. The middle perforated channel-like plate member 53 of the U-like cross section has both lateral plate portions or leg plates each formed with a large number of small through-holes 54 over a longitudinal range which can fully cover the bore of the outlet nozzle 12. The fourth embodiment of the invention can assure advantageous effects similar to those of the first to third embodiments described hereinbefore. Incidentally, the perforated channel-like plate member 53 can be mounted with ease, because one side thereof facing the outer periphery of the top nozzle is opened.

Many features and advantages of the present invention are apparent from the detailed description and thus it is intended by the appended claims to cover all such features and advantages of the structure which fall within the true spirit and scope of the invention. Further, since numerous modifications and combinations will readily occur to those skilled in the art, it is not intended to limit the invention to the exact construction and operation illustrated and described.

By way of example, it has been described that the perforated member serving as the flow stabilizing member according to the invention is mounted between the upper core plate 21 and the upper core support plate 20. However, the invention is never restricted to such disposition. The flow stabilizing member may equally be mounted, for example, on the inner wall surface of the core barrel 30 so long as the flow stabilizing member can be disposed between the upper core plate 21 and the upper core support plate 20. In that case, the area of the unoccupied region or space in which no structural members are present can be decreased, whereby the aimed effect can equally be achieved.

Further, in the foregoing description, it has been assumed that the perforated member is realized in a cylindrical form or a rectangular channel form. However, the present invention is never restricted to such geometrical configuration. It may be realized in a triangular, flat or semicircular form. Furthermore, when the perforated channel- or U-like plate member 53 opened radially outwardly is employed as the flow stabilizing member and mounted so as to enclose the upper core support column 23, legs or lateral portions thereof may be extended radially outwardly to the inner wall surface of the core barrel 30.

Accordingly, all suitable modifications and equivalents may be resorted to, falling within the spirit and scope of the invention.

## Claims

1. In a nuclear reactor including a upper plenum defined above a reactor core through which a heated fluid flows, said upper plenum being hydraulically communicated with a plurality of outlet nozzles installed on a side wall of a nuclear reactor vessel, a structure for supporting said reactor core, comprising:
at least one flow stabilizing member disposed at a location close to said outlet nozzle.

2. A reactor core supporting structure according to claim 1, wherein said flow stabilizing member is disposed substantially over a whole distance intervening between a lower core plate and a lower core support plate which cooperate to define said upper plenum.

3. A reactor core supporting structure according to claim 2, wherein said flow stabilizing member is constituted by a cylindrical member.

4. A reactor core supporting structure according to claim 2, wherein said flow stabilizing member is constituted by a tubular member having a substantially rectangular channel form.

5. A reactor core supporting structure according to claim 3 or 4, wherein said flow stabilizing member is provided with a number of small through-holes.

6. In a nuclear reactor including a upper plenum defined above a reactor core through which a heated fluid flows, said upper plenum being hydraulically communicated with a plurality of outlet nozzles installed on a side wall of a nuclear reactor vessel, a structure for supporting said reactor core, comprising:
at least one flow stabilizing member disposed in a region substantially intervening between adjacent outlet nozzles.

7. A reactor core supporting structure according to claim 6, wherein said flow stabilizing member is disposed substantially over a whole distance intervening between a lower core plate and a lower core support plate which cooperate to define said upper plenum.

8. A reactor core supporting structure according to claim 7, wherein said flow stabilizing member is constituted by a cylindrical member.

9. A reactor core supporting structure according to claim 7, wherein said flow stabilizing member is constituted by a tubular member having a substantially rectangular channel form.

10. A reactor core supporting structure according to claim 8 or 9, wherein said flow stabilizing member is provided with a number of small through-holes.
